# FASCICULE DE BREVET EUROPEEN

(11) **EP 1 167 078 B1**
(45) Date de publication et mention de la délivrance du brevet: **11.02.2004**
(21) Numéro de dépôt: 01114641.2
(22) Date de dépôt: 19.06.2001
(51) Int. Cl.: B60B 21/06

(54) **Dispositif d'accrochage d'un rayon à la jante d'une roue de bicyclette**
Befestigungsvorrichtung einer Speiche an einer Felge eines Fahrradrades
Fastening device of a spoke to a rim of a bicycle wheel

(30) Priorité: 27.06.2000 FR 0008351
(43) Date de publication de la demande: 02.01.2002
(73) Titulaire: MAVIC S.A., 74370 Metz-Tessy (FR)
(72) Inventeur: Mercat, Jean-Pierre, 01400 Chatillon sur Chalaronne (FR); Feche Pierre, 74960 Cran Gevrier (FR)
(74) Mandataire: Lejeune, Benoit

(56) Documents cités:
- EP-A- 0 818 328
- EP-A- 0 860 301
- DE-A- 4 137 662
- DE-A- 4 212 094

## Description

L'invention concerne un dispositif d'accrochage d'un rayon à la jante d'une roue de bicyclette à rayons.

Plus particulièrement, l'invention concerne l'accrochage d'un rayon à une jante dont seul le pont inférieur est équipé d'une pluralité de perçages d'accrochage. Le pont supérieur n'est pas percé, à l'exception de l'orifice prévu pour la valve.

Une telle jante est connue de la demande de brevet publiée sous le numéro EP 818 328, selon le mode de réalisation illustré à la figure 13.

Selon ce mode de réalisation, les perçages du pont inférieur ont été réalisés par une technique de refoulement qui repousse la matière vers l'intérieur du caisson en créant une cheminée. Une fois réalisée, la cheminée est taraudée afin de permettre l'accrochage du rayon au moyen d'un embout taraudé.

La construction d'une telle jante est avantageuse car elle évite le perçage du pont supérieur. De ce fait, elle permet de réaliser des roues plus rigides.

Une difficulté est cependant qu'il faut des rayons spéciaux ou des embouts d'accrochage particuliers pour réaliser une roue complète.

Une autre difficulté réside dans le fait que les embouts actuellement connus ne donnent qu'une faible tolérance d'orientation entre le rayon et le perçage, ce qui oblige de réaliser les perçages avec une grande précision angulaire.

Un but de l'invention est de proposer un dispositif d'accrochage amélioré qui est plus simple à réaliser, et à utiliser.

D'autres buts et avantages de l'invention apparaîtront au cours de la description qui va suivre.

Le dispositif d'accrochage selon l'invention est prévu pour accrocher l'extrémité filetée d'un rayon à un perçage taraudé d'une jante de bicyclette. Il comprend un embout dont la paroi externe est filetée au moins localement au diamètre et au pas du perçage taraudé de la jante, et un écrou taraudé au diamètre et au pas de l'extrémité filetée du rayon, l'écrou ayant une tête. Il est caractérisé par le fait que l'embout présente un logement interne traversant dont la paroi interne se resserre localement pour former un siège de retenue pour la tête de l'écrou, prolongé par une embouchure tronconique prévue pour le corps de l'écrou ou le corps du rayon pour permettre un effet de rotule de l'écrou dans le logement de l'embout.

L'invention sera mieux comprise en se référant à la description ci-dessous et aux dessins en annexe qui lui sont rattachés.
La figure 1 est relative à un premier mode de mise en oeuvre de l'invention.
La figure 2 représente en perspective l'embout fileté de la figure 1.
La figure 3 illustre un second mode de mise en oeuvre de l'invention.
La figure 4 montre en perspective l'embout fileté de la figure 3.
La figure 5 est relative à une variante de réalisation.
La figure 6 est relative à une autre variante.

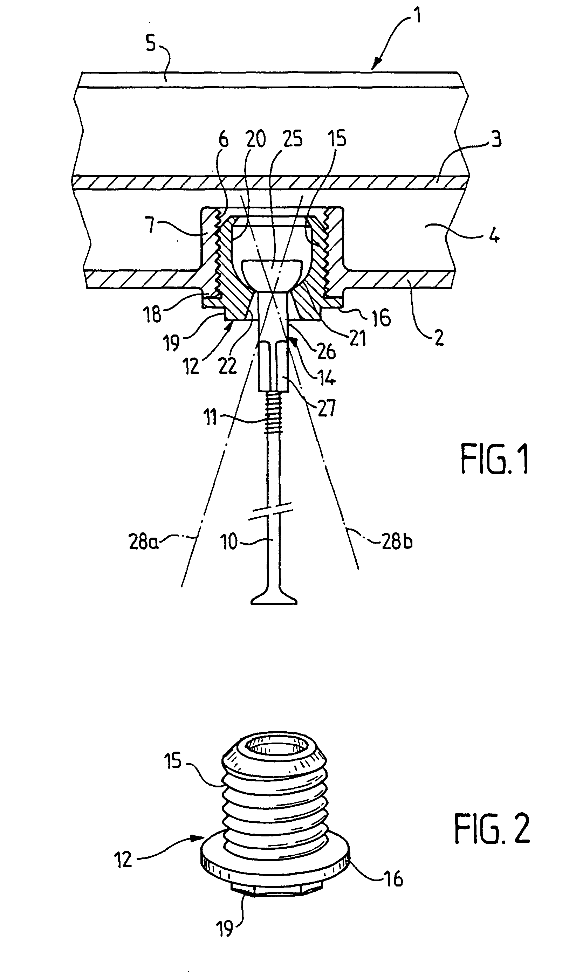

La figure 1 représente en coupe longitudinale une portion 1 de jante de bicyclette. De façon connue, la jante est réalisée en un alliage d'aluminium, et elle a un pont inférieur 2, un pont supérieur 3 et deux parois latérales 4 s'élevant au-delà du pont supérieur où elles forment une aile 5 d'accrochage du pneumatique.

La coupe de la figure 1 est réalisée au niveau d'un perçage 6 prévu pour l'accrochage d'un rayon.

Le perçage 6 est réalisé par une technique de perçage par refoulement qui crée une sorte de cheminée 7 orientée vers l'intérieur du caisson de la jante, le caisson étant la zone délimitée par les parois latérales et les ponts.

La paroi interne de la cheminée est cylindrique de révolution, et elle est taraudée. Par exemple, le taraudage de la cheminée est réalisé au pas normalisé M8 ou M9.

Le dispositif d'accrochage qui va être décrit maintenant est prévu pour accrocher l'extrémité d'un rayon 10 au perçage 7. Le rayon est de préférence un rayon standard, par exemple en acier inoxydable, de diamètre voisin de 2 millimètres. Il s'agit d'un rayon droit ou d'un rayon coudé, selon le mode d'accrochage prévu au niveau du moyeu.

De façon usuelle, le rayon a une extrémité filetée 11. Habituellement, le diamètre du filetage est de 2,2 millimètres.

Le dispositif d'accrochage comprend principalement un embout fileté 12 et un écrou 14.

L'embout 12 a un corps 15 fileté au diamètre et au pas du taraudage de la cheminée. La longueur du corps est voisine de la longueur de la cheminée. A la base du corps, l'embout a une collerette 16 de diamètre sensiblement supérieur. Le corps est prévu pour être vissé dans le perçage 7, la collerette étant serrée à force contre le pont inférieur, et comme le représente la figure 1 contre le petit rebord 18 en saillie qui se forme à la base de la cheminée.

Sous le rebord, se trouve une tête 19 avec une empreinte par exemple de section hexagonale prévue pour un outil de serrage.

Intérieurement, l'embout a un logement 20 qui le traverse de part en part.

Vers la base de l'embout, la paroi du logement 20 se resserre de façon à former un siège 21 suivi d'une embouchure 22. De préférence, le siège a une forme hémisphérique, et l'embouchure une forme tronconique s'évasant vers le bas, c'est-à-dire en direction du moyeu.

L'écrou 14 est logé dans le logement 20. L'écrou présente une tête élargie 25 et un corps 26. En section, les dimensions du corps de l'écrou sont inférieures au plus petit diamètre de l'embouchure. Par contre le diamètre maximum de la tête est supérieur à ce plus petit diamètre de l'embouchure. A l'intérieur du logement 20, l'écrou est libre en rotation autour de l'axe longitudinal défini par son corps.

De façon classique, l'écrou 14 est percé de part en part d'un orifice taraudé au diamètre et au pas de l'extrémité filetée 11 du rayon 10, et le corps 26 a une zone 27 avec une empreinte par exemple de section carrée prévue pour un outil de serrage.

La tête a de préférence une surface inférieure hémisphérique prévue pour s'appuyer contre la surface supérieure du siège. Un léger effet de rotule est ainsi obtenu grâce à la coopération des deux surfaces hémisphériques, et la possibilité pour le corps 14 d'évoluer dans l'embouchure tronconique 22. Le rayon 10 est représenté dans la figure 1 dans une orientation radiale, et l'on a schématisé en 28a et 28b les génératrices du cône à l'intérieur duquel le rayon est susceptible de s'orienter. L'angle au sommet du cône est de préférence voisin de 8 degrés.

Cette disposition avantageuse permet de percer le logement 7 selon une direction qui n'est pas nécessairement alignée avec la direction finale du rayon, une fois la roue assemblée. Par exemple, on choisit pour le perçage 7 une orientation intermédiaire entre une orientation radiale par rapport à la jante, et l'orientation finale du rayon. Ceci permet de simplifier l'opération de perçage. Grâce à l'effet de rotule précédemment décrit, l'écrou 14 prend de lui-même dans l'embout 12 l'orientation qui lui est dictée par le rayon.

L'embout qui a été décrit est utilisé de la façon suivante. Après avoir mis en place l'écrou 14 dans le logement de l'embout 12, l'embout est vissé et serré à force dans le perçage taraudé 7. Le rayon est engagé sur l'écrou avant ou après le vissage de l'embout sur la jante. L'ajustement en tension du rayon est réalisé en vissant plus ou moins l'écrou 14 sur l'extrémité filetée 11 du rayon 10. Cette dernière opération peut avantageusement être réalisée au moyen d'un outil manuel ou automatique traditionnel.

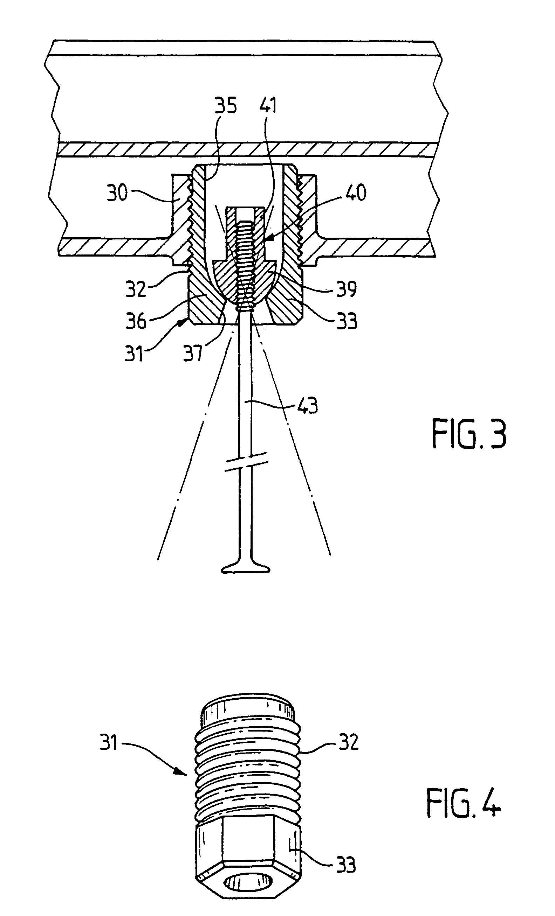

La figure 3 est relative à un autre mode de réalisation selon lequel le réglage de la tension du rayon est réalisé non pas avec l'écrou mais avec l'embout.

La jante est semblable à ce qui a été décrit précédemment. Le dispositif d'accrochage est composé comme avant d'un embout externe et d'un écrou interne.

L'embout 31 a une forme générale cylindrique de révolution. Extérieurement, il présente une partie supérieure taraudée 32 et une partie inférieure 33 avec une empreinte par exemple hexagonale prévue pour accoupler un outil de serrage.

Intérieurement, l'embout a un logement 35 dont la paroi se resserre vers le bas de façon à former un siège 36 de retenue pour la tête 39 d'un écrou 40. Le siège est ici situé vers l'extrémité de l'embout qui est orientée vers le centre de la jante.

Dans le mode de réalisation illustré, l'écrou présente un corps 41 situé à l'intérieur du logement 35.

Le logement 35 se poursuit au-delà du siège par une embouchure 37 de forme tronconique. Le diamètre minimum de l'embouchure est inférieur au diamètre maximum de la tête et il est supérieur au diamètre en section du corps de rayon 43.

De préférence, les parois du siège et de la tête qui sont prévues pour venir en appui l'une contre l'autre ont une forme hémisphérique. Ainsi, on obtient un effet de rotule semblable à ce qui a été précédemment décrit. De plus, il y a comme dans le cas précédent une libre rotation relative de l'embout par rapport à l'écrou.

Contrairement au cas précédent, l'écrou 40 est vissé en force à l'extrémité filetée du rayon. Par exemple, son corps 41 a une empreinte qui permet l'accouplement d'un outil de serrage. L'embout 31 est quant à lui vissé plus ou moins dans le perçage 30 selon la tension souhaitée pour le rayon. La longueur de la zone filetée 32 est suffisamment longue pour permettre un réglage de tension correct.

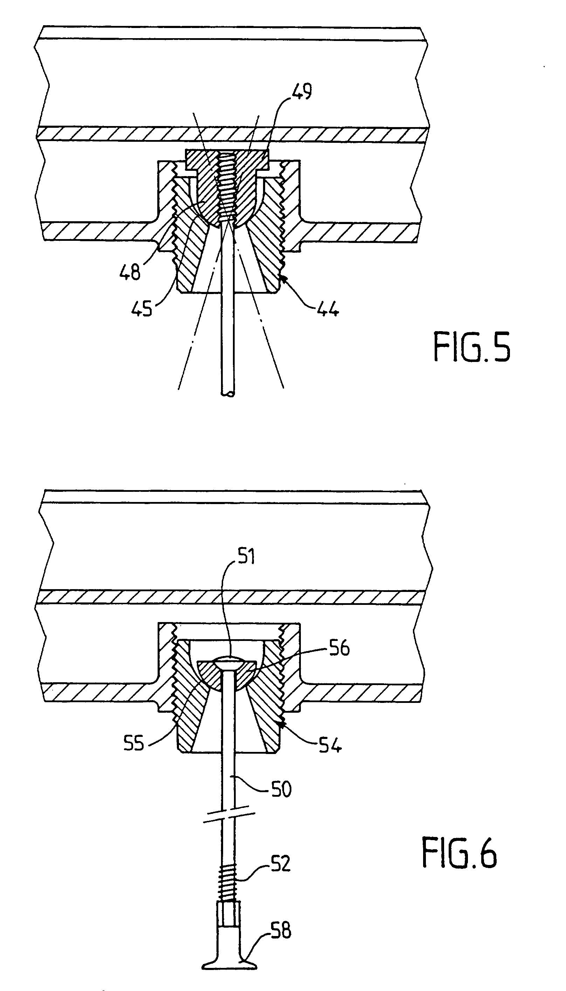

La figure 5 est relative à une variante de réalisation où l'embout 44 a un siège de retenue 45 qui est situé vers le milieu de la longueur de l'embout 44. Comme dans le cas précédent, la tête de l'écrou 48 est retenue par le siège de l'embout, et l'écrou est vissé à force à l'extrémité filetée du rayon au moyen du corps 49 de l'écrou qui a une empreinte d'accouplement avec un outil de serrage.

La figure 6 représente une autre variante où le rayon est un rayon de type droit avec une tête 51 située du côté de la jante et une extrémité filetée 52 située du côté du moyeu.

La tête 51 est retenue dans un embout 54 de même construction que l'embout 44 précédent. De préférence, la tête repose sur le siège 55 de l'embout par l'intermédiaire d'une rondelle 56 ayant une surface de contact hémisphérique qui donne un effet de rotule avec l'embout.

Comme dans le cas précédent, le réglage en tension du rayon se fait par l'intermédiaire de l'embout. L'extrémité filetée 52 du rayon est vissée à force dans un écrou 58 retenu dans le moyeu ou dans un orifice taraudé du moyeu. D'autres constructions à ce niveau peuvent être envisagées.

Naturellement, la présente description n'est donnée qu'à titre indicatif, et l'on pourrait adopter d'autres mises en oeuvre de l'invention sans pour autant sortir du cadre de celle-ci.

En particulier, on pourrait prévoir tout moyen approprié de freinage afin d'éviter un desserrage intempestif de l'embout ou de l'écrou.

## Revendications

1. Dispositif d'accrochage prévu pour accrocher l'extrémité filetée d'un rayon à un perçage taraudé d'une jante de bicyclette comprenant un embout (12, 31, 44, 54) dont la paroi externe est filetée au moins localement au diamètre et au pas du perçage taraudé de la jante, et un écrou (14, 40, 48, 58) taraudé au diamètre et au pas de l'extrémité filetée du rayon, l'écrou ayant une tête (25, 39, 47, 51), **caractérisé par le fait que** l'embout (12, 31, 44, 54) présente un logement interne traversant (20, 35) dont la paroi interne se resserre localement pour former un siège de retenue (21, 36, 45, 55) pour la tête (25, 39, 47) de l'écrou ou la tête (51) du rayon, prolongé par une embouchure tronconique (22, 37) prévue pour le corps de l'écrou ou le corps du rayon, pour permettre un effet de rotule de l'écrou dans le logement de l'embout.

2. Dispositif selon la revendication 1, **caractérisé par le fait que** les surfaces du siège (21, 36, 45, 55) et de la tête (25, 39, 47) d'écrou qui sont en appui l'une contre l'autre ont une forme hémisphérique.

3. Dispositif selon la revendication 1, **caractérisé par le fait que** l'angle au sommet du tronc de cône est de l'ordre de 8 degrés.

4. Dispositif selon la revendication 1, **caractérisé par le fait que** l'embout (12) est prévu pour être vissé à force contre la jante, et que l'écrou (14) est libre en rotation dans le logement (20) de l'embout.

5. Dispositif selon la revendication 4, **caractérisé par le fait que** l'embout (12) a une collerette (16) qui est prévue pour être serrée à force contre la paroi de la jante.

6. Dispositif selon la revendication 1, **caractérisé par le fait que** l'écrou (40, 48) est prévu pour être vissé à force à l'extrémité du rayon, et que l'embout (31, 44) est prévu pour être vissé plus ou moins dans le perçage de la jante.

7. Dispositif selon la revendication 6, **caractérisé par le fait que** l'écrou (40) est logé à l'intérieur du logement (35) de l'embout.

8. Dispositif selon la revendication 1, **caractérisé par le fait que** la tête (51) du rayon (50) est retenue dans le siège (55) de l'embout (54) par une rondelle (56) ayant une surface hémisphérique coopérant avec le siège (55).

## Patentansprüche

1. Befestigungsvorrichtung, welche für das Befestigen des mit einem Gewinde versehenen Endes einer Speiche an einer innengewindeten Bohrung einer Felge eines Zweirades versehen ist, aufweisend einen Ansatzstück (12, 31, 44, 54) dessen äußere Wand mindestens stellenweise mit einem Gewinde versehen ist, im Durchmesser und in der Steigung der innengewindeten Bohrung der Felge und eine Mutter (14, 40, 48, 58), welche innengewindet ist im Durchmesser und in der Steigung des mit einem Gewinde versehenen Endes der Speiche, wobei die Mutter einen Kopf (25, 39, 47, 51) aufweist, **dadurch gekennzeichnet, dass** das Ansatzstück (12, 31, 44, 54) eine innere, durchgehende Aufnahme (20, 35) aufweist, deren innere Wand sich stellenweise verengt, um einen Haltesitz (21, 36, 45, 55) für den Kopf (25, 39, 47) der Mutter oder den Kopf (51) der Speiche zu bilden, der durch eine kugelstumpfartige Mündung (22, 37) verlängert ist, die für den Körper der Mutter oder den Körper der Speiche vorgesehen ist, um einen Kugelgelenkeffekt der Mutter in der Aufnahme des Ansatzstückes zu ermöglichen.

2. Vorrichtung nach Anspruch 1, **dadurch gekennzeichnet, dass** die Oberflächen des Sitzes (21, 36, 45, 55) und des Kopfes (25, 39, 47) der Mutter, die gegeneinander in Anlage sind, eine halbkugelförmige Form aufweisen.

3. Vorrichtung nach Anspruch 1, **dadurch gekennzeichnet, dass** der Winkel an der Spitze des Kegelstumpfes in der Größenordnung von 8° ist.

4. Vorrichtung nach Anspruch 1, **dadurch gekennzeichnet, dass** das Ansatzstück (12) vorgesehen ist, um kraftschlüssig gegen die Felge eingeschraubt zu werden und dass die Mutter (14) in der Aufnahme (20) des Ansatzstückes frei in Drehung ist.

5. Vorrichtung nach Anspruch 4, **dadurch gekennzeichnet, dass** das Ansatzstück (12) einen Kragen (16) aufweist, der vorgesehen ist, kraftschlüssig gegen die Wand der Felge gespannt zu werden.

6. Vorrichtung nach Anspruch 1, **dadurch gekennzeichnet, dass** die Mutter (40, 48) vorgesehen ist, kraftschlüssig an dem Ende der Speiche eingeschraubt zu werden und dass das Ansatzstück (31, 44) vorgesehen ist, mehr oder weniger in der Bohrung der Felge eingeschraubt zu sein.

7. Vorrichtung nach Anspruch 6, **dadurch gekennzeichnet, dass** die Mutter (40) im Inneren der Aufnahme (35) des Ansatzstückes angeordnet ist.

8. Vorrichtung nach Anspruch 1, **dadurch gekennzeichnet, dass** der Kopf (51) der Speiche (50) in dem Sitz (55) des Ansatzstückes (54) durch eine Unterlegscheibe (56) gehalten wird, welche eine halbkugelförmige Oberfläche aufweist, die mit dem Sitz (55) zusammenwirkt.

## Claims

1. Fastening device provided to fasten the threaded end of a spoke to a threaded boring of a bicycle rim having an end piece (12, 31, 44, 54) whose outer wall is threaded at least locally according to the diameter and pitch of the threaded boring of the rim, and a nut (14, 40, 48, 58) threaded according to the diameter and pitch of the threaded end of the spoke, the nut having a head (25, 39, 47, 51), **characterized in that** the end piece (12, 31, 44, 54) has a traversing inner housing (20, 35) whose inner wall closes locally to form a seat (21, 36, 45, 55) for retaining the head (25, 39, 47) of the nut or the head (51) of the spoke, extended by an truncated opening (22, 37) provided for the body of the nut or the body of the spoke so as to allow a swiveling effect of the nut in the housing of the end piece.

2. Device according to claim 1, **characterized in that** the surfaces of the seat (21, 36, 45, 55) and head (25, 39, 47) of the nut that take support one against the other have a hemispherical form.

3. Device according to claim 1, **characterized in that** the angle at the top of the truncated cone is on the order of 8 degrees.

4. Device according to claim 1, **characterized in that** the end piece (12) is provided to be forcibly screwed against the rim, and **in that** the nut (14) is free in rotation in the housing (20) of the end piece.

5. Device according to claim 4, **characterized in that** the end piece (12) has a collar (16) that is provided to be forcibly tightened against the wall of the rim.

6. Device according to claim 1, **characterized in that** the nut (40, 48) is provided to be forcibly screwed at the end of the spoke, and **in that** the end piece (31, 44) is provided to be more or less screwed into the boring of the rim.

7. Device according to claim 6, **characterized in that** the nut (40) is housed inside of the housing (35) of the end piece.

8. Device according to claim 1, **characterized in that** the head (51) of the spoke (50) is retained in the seat (55) of the end piece (54) by a washer (56) having a hemispherical surface that cooperates with the seat (55).
